# EUROPÄISCHE PATENTSCHRIFT

(11) **EP 3 043 938 B1**
(45) Veröffentlichungstag und Bekanntmachung des Hinweises auf die Patenterteilung: **22.02.2023**
(21) Anmeldenummer: 14789971.0
(22) Anmeldetag: 11.09.2014
(51) Int. Cl.: B23B 29/03, B23B 29/20, B23B 51/04, B23B 27/00, B23B 27/14

(54) **SCHNEIDWERKZEUG**
CUTTING TOOL
OUTIL DE COUPE

(30) Priorität: 13.09.2013 AT 2982013 U
(43) Veröffentlichungstag der Anmeldung: 20.07.2016
(73) Patentinhaber: Ceratizit Austria Gesellschaft m.b.H., 6600 Reutte (AT)
(72) Erfinder: VENTURINI, Remus, 87672 Rosshaupten (DE); SCHLEINKOFER, Uwe, A-6600 Reutte (AT); RONACHER, Herbert, A-6610 Wängle (AT)
(74) Vertreter: Ciesla, Dirk
(86) Internationale Anmeldenummer: PCT/AT2014/000169
(87) Internationale Veröffentlichungsnummer: WO 2015/035436

(56) Entgegenhaltungen:
- EP-A1- 0 642 859
- EP-A1- 1 339 517
- EP-A2- 0 181 844
- DE-A1-102007 016 994
- US-A1- 2001 033 779
- US-A1- 2009 257 835

## Beschreibung

Die Erfindung betrifft eine Verwendung eines Schneidwerkzeugs zum Bohren ins Volle und zum Drehen.

EP 0 642 859 B1 offenbart ein Schneidwerkzeug zum Drehen und Bohren ins Volle. Das Schneidwerkzeug weist einen im wesentlichen zylindrischen Werkzeuggrundkörper mit einem Bearbeitungsabschnitt auf. Der Bearbeitungsabschnitt hat eine in Längsrichtung verlaufende Spannut mit einer Ausnehmung, in der eine prismatische, im Wesentlichen rhombus- oder rhomboidförmige Schneidplatte eingeschraubt ist. Eine stirnseitige Schneidkante verläuft etwa senkrecht zur Bohrlängsachse des Werkzeuges, wobei ein Ende dieser Schneidkante den Bohrungsdurchmesser bestimmt während das andere Schneidkantenende über die Bohrlängsachse hinausreicht. Das Werkzeug ist sowohl zum Bohren als auch zum Drehen geeignet. Beispielsweise kommt es auf Drehmaschinen zum Einsatz, wo zusätzlich zu einer Bohrbearbeitung des Werkstückes ohne Werkzeugwechsel auch noch Drehbearbeitungen wie Längsdrehen, Plandrehen oder Kopierdrehen durchgeführt werden können.

DE 10 2007 016 994 A1 offenbart eine Verwendung nach dem Oberbegriff des Anspruchs 1 und beschreibt ein Bohrwerkzeug mit einem Schneideinsatz, der einen pyramidenförmigen Grundkörper aufweist. Die Seitenkanten des Schneideinsatzes, an denen Seitenfächen aneinander angrenzen, bilden Schneidkanten. Der Schneideinsatz ist mit einer Basisfläche und zumindest einer der Seitenflächen gegen entsprechende Anlageflächen eines Plattensitzes verspannt.

Es ist Aufgabe der Erfindung, eine verbesserte Verwendung eines Schneidwerkzeug bereitzustellen.

Diese Aufgabe wird mit den Merkmalen des Anspruchs 1 gelöst.

Vorteilhafte Ausgestaltungen sind Gegenstand der Unteransprüche.

Das Schneidwerkzeug weist einen Werkzeuggrundkörper mit einem Bearbeitungsabschnitt mit einer Aufnahme für eine Schneidplatte auf, die an dem Bearbeitungsabschnitt des Werkzeuggrundkörpers wiederlösbar befestigbar ist. Die Aufnahme für die Schneidplatte ist so am Werkzeuggrundkörper angeordnet, dass ins volle Material gebohrt werden kann, bzw. bei Rotation (des eingespannten Schneidwerkzeugs oder des Werkstücks) wird der gesamte Bohrquerschnitt von einer Schneidkante der zumindest einen Schneidplatte überstrichen. Beispielsweise hat eine senkrecht zur Werkzeugachse liegende (Stirn-) Schneidkante der Schneidplatte ein erstes (außenliegende) Ende, dass den Bohrdurchmesser festlegt und ein (innenliegendes) Ende das zumindest bis zur Schneidwerkzeugachse reicht oder über die Schneidwerkzeugachse hinaus reicht. Alternativ können mehrere Schneidplatten bereitgestellt werden, wobei die Schneidkanten aller Schneidplatten kombiniert bzw. gemeinsam den Bohrquerschnitt des Schneidwerkzeugs bestimmen.

Die Aussparung ist zur Aufnahme einer Kühlschmiermitteldüse ausgebildet. Durch die zumindest eine Aussparung wird gewährleistet, dass der Stützabschnitt nicht an der/den Kühlschmiermitteldüse(n) einer Werkzeugaufnahme anliegt bzw. die Düsen der Werkzeugaufnahme nicht demontiert werden müssen, damit der Stützabschnitt wie oben beschrieben auf der Werkzeugaufnahme anliegt. Das Schneidwerkzeug kann beispielsweise in einer Werkzeugaufnahme mit zwei Kühlschmiermitteldüsen eingespannt werden, wie z.B. einer Bohrstangenaufnahme nach DIN ISO 10889 Form E2. In dieser Ausgestaltung weist der Stützabschnitt in Bezug auf die Werkzeugachse zwei gegenüberliegende Aussparungen auf, deren Positionen den Positionen der (axial gegenüberliegenden) Kühlschmiermitteldüsen entsprechen.

Der Werkzeuggrundkörper weist einen Werkzeugschaft auf, der bevorzugt zylindrisch oder im Wesentlichen zylindrisch sein kann. Wenn das Schneidwerkzeug in einer Werkzeugaufnahme einer Werkstückbearbeitungsmaschine (z.B. Drehmaschine) eingespannt wird, wird der Werkzeugschaft in der Werkzeugaufnahme aufgenommen.

Weiterhin weist der Werkzeuggrundkörper einen Stützabschnitt auf, der zwischen dem Bearbeitungsabschnitt und dem Werkzeugschaft angeordnet ist. Der Querschnitt des Stützabschnitts ist größer als der Querschnitt des Werkzeugschafts, so dass beim Einspannen des Schneidwerkzeugs in einer Werkzeugaufnahme der Stützabschnitt an einer Stirnfläche der Werkzeugaufnahme anliegt. D.h. nach dem Einspannen des Schneidwerkzeugs liegt der Stützabschnitt außerhalb der Werkzeugaufnahme. Durch den größeren Querschnitt des Stützabschnitts weist das Schneidwerkzeug eine höhere Biegesteifigkeit auf, wodurch das Schneidwerkzeug bei der Werkstückbearbeitung laufruhiger und stabiler ist. Zudem bietet der Stützabschnitt eine senkrecht oder im Wesentlichen senkrecht zur Werkzeugachse (bzw. Werkzeugschaft) liegende Auflagefläche bzw. Stützfläche für das Schneidwerkzeug. Durch das Anliegen des Stützabschnitts an einer Werkzeugaufnahme wird gewährleistet, dass bei der Werkstückbearbeitung auftretende (seitliche) Kräfte bzw. Biegemomente auf die Werkstückaufnahme abgeleitet werden. Zusammenfassend bietet das beschriebene Schneidwerkzeug hohe Stabilität und Laufruhe, wodurch hohe Präzision bei der Werkstückbearbeitung gewährleistet wird.

Bevorzugt ist der maximale Durchmesser des Stützabschnitts mindestens 20% größer als der maximale Durchmesser des Werkzeugschafts, vorzugsweise mindestens 30%, besonders bevorzugt mindestens 40%. Dadurch wird gewährleistet, dass der Stützabschnitt radial so weit über den Schaft herausragt, dass der Stützabschnitt sicher an einer Werkzeugaufnahme anliegt. Beispielsweise weist ein Schneidwerkzeug einen (maximalen) Werkzeugschaftdurchmesser von 25 mm und der Stützabschnitt einen maximalen Durchmesser von 35 mm auf. Bei axial-symmetrischer (zylindrischer) Ausgestaltung des Stützabschnitts ragt der Stützabschnitt in diesem Beispiel umlaufend 5 mm über den Werkzeugschaft hinaus.

Besonders bevorzugt ist der Stützabschnitt als umlaufender Flansch ausgebildet, um eine stabile Verbindung zum Werkzeuggrundkörper bereitzustellen.

Vorzugsweise weist der Stützabschnitt eine umlaufende (ununterbrochene) Stützfläche auf, die im eingebauten Zustand (umlaufend) an einer Stirnfläche einer Werkzeugaufnahme anliegt. Dadurch wird das Schneidwerkzeug umlaufend um seine Achse gestützt wodurch die Stabilität des Schneidwerkzeugs maximiert wird.

Bevorzugt verjüngt sich der Stützabschnitt in Richtung Bearbeitungsabschnitt, so dass sich der Querschnitt des Stützabschnitts in Richtung Bearbeitungsabschnitt bzw. Schneidplatte verringert. Der Stützabschnitt kann dabei insbesondere konisch ausgebildet sein.

Besonders bevorzugt entspricht die Länge des Stützabschnitts in axialer Richtung des Schneidwerkzeugs mindestens 1/6 der axialen Länge des Bearbeitungsabschnitts, vorzugsweise mindestens 1/5, besonders bevorzugt maximal 1/3 der axialen Länge des Bearbeitungsabschnitts. Dadurch wird für das Schneidwerkzeug eine stabile Stütze bereitgestellt. Insbesondere ist der Querschnitt bzw. Durchmesser des Bearbeitungsabschnitts kleiner als der Querschnitt bzw. Durchmesser des Stützabschnitts. Durch die Begrenzung der axialen Ausdehnung des Stützabschnitts wird gewährleistet, dass beim Bohren in Vollmaterial eine maximale Bohrtiefe bei gleichzeitig deutlich verbesserter Stabilität bereitgestellt wird. Der Bearbeitungsabschnitt des Werkzeuggrundkörpers erstreckt sich von dem Ende des Werkstückgrundkörpers an dem die Schneidplatte angeordnet ist bis zu der Stelle oder dem Bereich an dem der Querschnitt des Grundkörpers sich vergrößert bzw. bis zu der Stelle an der sich der Stützabschnitt anschließt. Beispielsweise weist ein Schneidwerkzeug mit einem Bohrdurchmesser von 20 mm in axialer Richtung eine Gesamtlänge von 111 mm auf, der Bearbeitungsabschnitt eine axiale Länge von 45 mm und der Stützabschnitt eine axiale Ausdehnung von 10 mm.

Gemäß einer bevorzugten Ausgestaltung ist die Aussparung so ausgebildet, dass im eingebauten Zustand die Schneidplatte von einem Kühlschmiermittelstrahl einer Werkzeugaufnahme mit zumindest einer Kühlschmiermitteldüse erreichbar ist.

Die zumindest eine Aussparung kann als Durchbruch oder Bohrung im Stützabschnitt ausgebildet sein. Zusätzlich oder alternativ kann die zumindest eine Aussparung (oder eine weitere Aussparung) am Umfang des Stützabschnitts ausgebildet sein, so dass die Aussparung nach außen offen ist. Je nachdem in welcher Werkzeugaufnahme das Schneidwerkzeug verwendet wird, ist eine entsprechende Aussparung oder sind entsprechende Aussparungen im Stützabschnitt vorgesehen. Beispielsweise sind bei der Verwendung des Schneidwerkzeugs mit einer Werkzeugaufnahme ISO 10889 Form E2-50x25 zwei in axialer Richtung gegenüberliegende Bohrungen vorgesehen mit einem Durchmesser von 5 mm, deren Mittelpunkt jeweils 18 mm von der Werkzeugachse entfernt liegt. Je nach radialer Ausdehnung des Stützabschnitts liegen die Bohrungen im vollen Material des Stützabschnitts oder sind am Umfang des Stützabschnitts angeordnet, so dass die Bohrungen nach außen offen sind. Der Durchmesser oder die Größe der zumindest einen Aussparung ist so ausgelegt, dass der Stützabschnitt nicht an den Kühlmitteldüsen z.B. einer Werkzeugaufnahme mit einstellbaren Kugelspritzdüsen anliegt.

Vorzugsweise ist der Werkzeuggrundkörper einteilig ausgebildet bzw. sind Bearbeitungsabschnitt, Stützabschnitt und Werkzeugschaft einteilig ausgebildet. Alternativ kann beispielsweise der Bearbeitungsabschnitt und der Werkzeugschaft einteilig ausgebildet sein und der Stützabschnitt wird separat gefertigt und kann nachträglich am Schneidwerkzeug befestigt werden. Beispielsweise wird der Stützabschnitt unlösbar befestigt, z.B. zwischen Schaft und Bearbeitungsabschnitt angeschweißt oder angelötet. Alternativ kann der Stützabschnitt wiederlösbar befestigt werden. Beispielsweise mittels einer oder mehrerer Schrauben die senkrecht zur Werkzeugachse durch den Stützabschnitt geführt sind und den Stützabschnitt am Werkzeuggrundkörper fixieren. Ein weiteres Beispiel einer lösbaren Verbindung ist eine Schraubverbindung zwischen Schaft/Befestigungsabschnitt und Stützabschnitt, wobei der Stützabschnitt ein Innengewinde aufweist und der Schaft/Befestigungsabschnitt ein entsprechendes Außengewinde, so dass der Stützabschnitt auf den Grundkörper aufgeschraubt werden kann. So kann für verschiedene Werkzeugaufnahmen jeweils ein passender Stützabschnitt am Schneidwerkzeug befestigt werden. Dies ist vorteilhaft, wenn das Schneidwerkzeug in verschiedenen Werkzeugaufnahmen mit z.B. unterschiedlicher Anzahl von integrierten Kühlmitteldüsen verwendet werden. D.h. jeder Stützabschnitt hat an die entsprechende Werkzeugaufnahme (bzw. entsprechenden Kühlmitteldüsen) angepasste Aussparungen.

Anhand der Figuren wird eine Ausführungsform der Erfindung näher erläutert. Es zeigen:
- Fig. 1: eine perspektivische Ansicht einer Ausgestaltung eines Scheidwerkzeugs,
- Fig. 2a-c: zwei Seitenansichten und eine Draufsicht des Schneidwerkzeugs von Fig. 1,
- Fig. 3: eine perspektivische Ansicht einer Bohreraufnahme für Werkzeuge mit innerer Kühlmittelzufuhr mit eingespanntem Schneidwerkzeug von Fig. 1, und
- Fig. 4: eine perspektivische Ansicht einer Bohrstangenaufnahme mit innerer Kühlmittelzufuhr und zusätzlichen integrierten Kühlschmiermitteldüsen mit eingespanntem Schneidwerkzeug von Fig. 1.

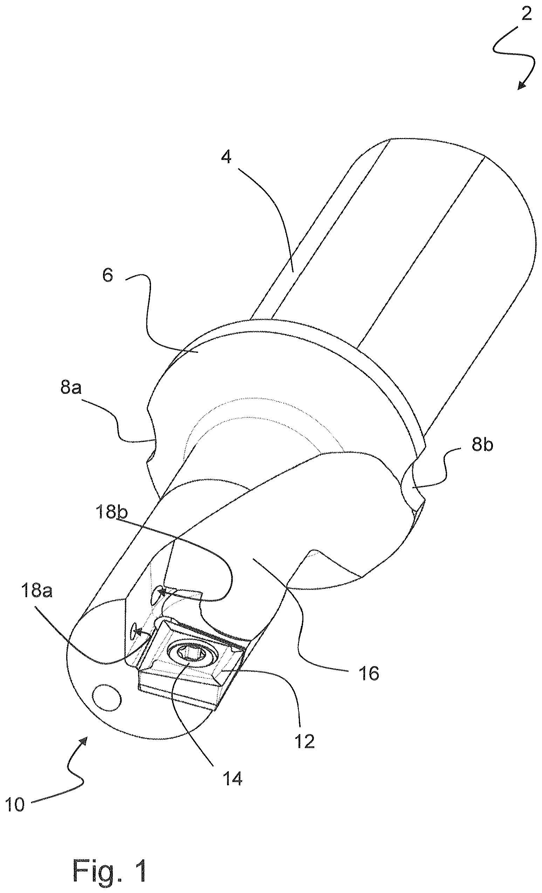

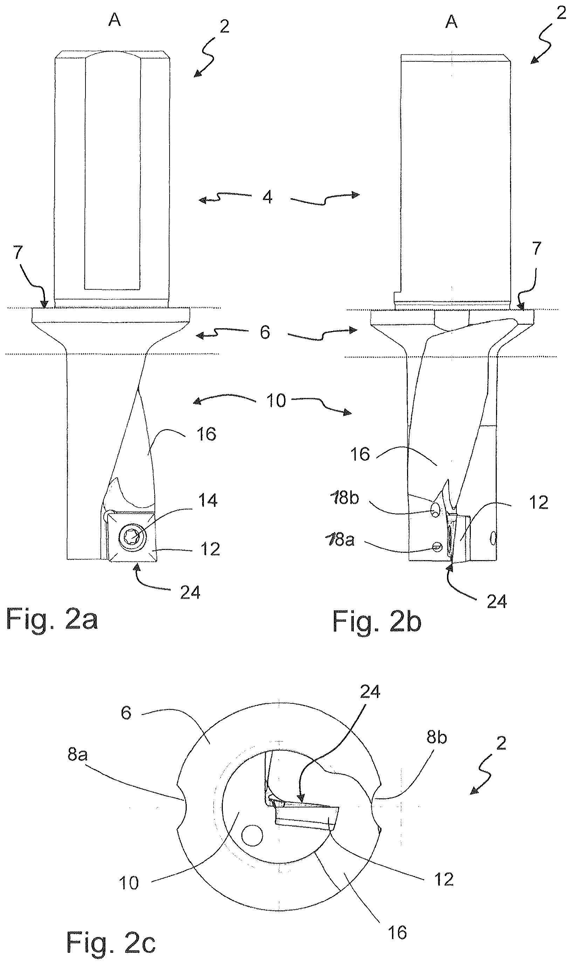

Fig. 1 zeigt eine perspektivische Ansicht einer bevorzugten Ausgestaltung eines Scheidwerkzeugs 2. Fig. 2a-c zeigen zwei Seitenansichten und eine Draufsicht des Schneidwerkzeugs 2 von Fig. 1, das zum Drehen und zum Bohren ins Volle ausgebildet ist. Das Schneidwerkzeug 2 weist einen Werkzeuggrundkörper mit einem Werkzeugschaft 4, einem daran angrenzenden Stützabschnitt 6 und einem Bearbeitungsabschnitt 10 auf, sowie eine Schneidplatte 12.

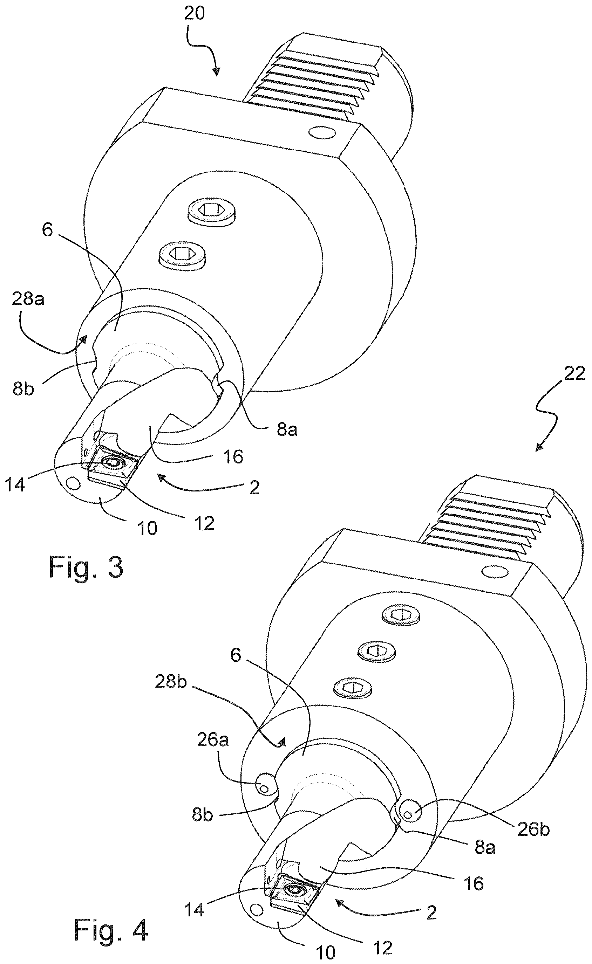

Der Schaft 4 ist zylindrisch oder im Wesentlichen zylindrisch und dazu ausgebildet in einer Werkzeugaufnahme 20, 22 (Fig. 3, Fig. 4) aufgenommen bzw. eingespannt zu werden. Wie in Fig. 3 und Fig. 4 zu sehen wird der Schaft 4 komplett in der Werkzeugaufnahme 20, 22 aufgenommen.

Der Stützabschnitt 6 hat einen größeren Querschnitt bzw. Durchmesser als der Schaft 4 und eine Stützfläche 7 des Stützabschnitts liegt beim Einspannen in eine Werkzeugaufnahme 20, 22 auf einer Stirnfläche 28a-b (Fig. 3, Fig. 4) der Werkzeugaufnahme 20, 22 an. D.h. mittels des Stützabschnitts 6 wird die senkrecht oder im Wesentlichen senkrecht zur Werkzeugachse A liegende (zusätzliche) Stützfläche 7 für das Schneidwerkzeug 2 bereitgestellt. Dadurch wird die Stabilität des Schneidwerkzeugs 2 bei der Werkstückbearbeitung deutlich erhöht, insbesondere gegen seitlich zur Achse A wirkende Kräfte bzw. Biegemomente. Dieser Effekt wird zum einen durch die Verstärkung (bzw. den größeren Querschnitt) des Werkzeuggrundkörpers im Bereich des Stützabschnitts bewirkt und zum anderen durch das "Abstützen" des Schneidwerkzeugs an der Werkzeugaufnahme 20, 22. Der Stützabschnitt 6 erstreckt sich vom Ende des Werkzeugschafts 4 in Richtung Bearbeitungsabschnitt 10 bis zu der Stelle an der der Querschnitt des Stützabschnitts 6 in den (zylindrischen) Querschnitt des Bearbeitungsabschnitts 10 übergeht. In Fig. 2a-b sind mittels gestrichelter Linien die Grenzen zwischen Bearbeitungsabschnitt 10, Stützabschnitt 6 und Schaft 4 dargestellt.

Der Stützabschnitt 6 weist an seinem Umfang zwei axial gegenüberliegende Aussparungen 8a-b auf. Die Aussparungen 8a-b sind so positioniert, dass beim Einspannen des Schneidwerkzeugs 2 in einer Werkzeugaufnahme 22 (Fig. 4) mit integrierten Kühlschmiermitteldüsen 26a-b, die Kühlschmiermitteldüsen 26a-b in den Aussparungen 8a-b zu liegen kommen und der Stützabschnitt 6 diese nicht berührt. Bei der konkret dargestellten Ausführungsform sind die Aussparungen dabei sogar derart ausgebildet, dass die Kühlschmiermitteldüsen 26a-b nicht vom Stützabschnitt 6 abgedeckt werden.

Der Bearbeitungsabschnitt 10 weist eine Spannut 16 und eine Aufnahme zum Befestigen einer Schneidplatte 12 mittels einer Schraube 14 auf. Abgesehen von der Spannut 16 hat der Bearbeitungsabschnitt 10 einen zylindrischen oder im Wesentlichen zylindrischen Querschnitt, d.h. einen konstanten (maximalen) Durchmesser. Dadurch wird beim Bohren in Vollmaterial eine maximale Stabilität des Grundkörpers gewährleistet. Der Bearbeitungsabschnitt 10 des Werkzeuggrundkörpers erstreckt sich von dem Ende des Grundkörpers an dem die Schneidplatte 12 befestigt ist bis zu der Stelle an der sich der Querschnitt des Grundkörpers vergrößert, d.h. bis zu der Stelle an der der Stützabschnitt 6 an den Bearbeitungsabschnitt 10 anschließt. Der Werkzeuggrundkörper weist Bohrungen 18a-b zur Leitung von Kühlschmiermittel auf, die im Bereich der Aufnahme für die Schneidplatte 12 münden, so dass während einer Werkstückbearbeitung Kühlschmiermittel direkt zur Schneidplatte 12 geleitet werden kann.

Wie in Fig. 2b zu sehen ragt die stirnseitige Schneidkante 24 der Schneidplatte 12 über den Werkzeuggrundkörper hinaus. In der Draufsicht des Schneidwerkzeugs 2 (Fig. 2c) ist zu sehen, dass ein äußeres Ende der stirnseitigen Schneidkante 24 den Bohrradius des Schneidwerkzeugs 2 bestimmt. Ein inneres Ende bzw. ein nach innen weisendes Ende der Schneidkante 24 reicht bis zur Achse A des Schneidwerkzeugs 2 bzw. ragt über die Achse A hinaus. Durch diese Positionierung der Schneidplatte 12 ist gewährleistet, dass die Schneidkante 24 bei Rotation (des Schneidewerkzeugs oder eines Werkstücks) den gesamten Bohrquerschnitt überstreicht und so mit dem Schneidwerkzeug 2 in Vollmaterial gebohrt werden kann. Dabei kann zum Erstellen einer Bohrung das Schneidwerkzeug 2 rotierend um seine Achse A angetrieben werden. Alternativ kann bei stillstehendem Schneidwerkzeug 2 ein zu bearbeitendes Werkstück rotierend angetrieben werden. Insbesondere können mit dem Schneidwerkzeug 2 Bohrungen mit ebenem Bohrlochgrund erzeugt werden. Zusätzlich kann das Schneidwerkzeug 2 zum Drehen verwendet werden, beispielsweise zum Längsdrehen, Plandrehen oder Kopierdrehen.

Fig. 3 zeigt eine perspektivische Ansicht einer Werkzeugaufnahme 20 für Werkzeuge mit innerer Kühlmittelzufuhr (DIN ISO 10889-1 Form E1). In der Werkzeugaufnahme 20 ist das Schneidwerkzeug 2 von Fig. 1 eingespannt. Bei einer Werkstückbearbeitung wird Kühlschmiermittel über die Werkzeugaufnahme 20 und die Bohrungen 18a-b im Schneidwerkzeug 2 direkt zur Schneidplatte 12 geleitet. Wie oben beschrieben liegt der Werkzeugschaft 4 innerhalb der Werkzeugaufnahme 20 und der Stützabschnitt 6, bzw. dessen Stützfläche 7, liegt an einer senkrecht zur Achse A liegenden Stirnfläche 28a der Werkzeugaufnahme 20 an. Durch den (im Vergleich zum Schaft 4 und Bearbeitungsabschnitt 10) größeren Querschnitt des Stützabschnitts 6 wird wie oben beschrieben das Schneidwerkzeug 2 stabilisiert.

Fig. 4 zeigt eine perspektivische Ansicht einer Bohrstangenaufnahme 22 mit zusätzlichen Kühlschmiermitteldüsen 26a-b (DIN ISO 10889-1 Form E2). In der Aufnahme 22 ist das Schneidwerkzeug 2 von Fig. 1 eingespannt. Durch die oben beschriebenen Aussparungen 8a-b im Stützabschnitt 6 kann das Werkzeug 2 ohne weitere Vorbereitungsschritte (z.B. Demontage der Düsen 26a-b) in die Werkzeugaufnahme 22 eingespannt werden. D.h. im Vergleich zu herkömmlichen Werkzeugen (ohne Stützabschnitt) wird die Rüstzeit nicht verlängert.

Zusammenfassend können die oben beschriebenen Vorteile des Schneidwerkzeugs 2 auch bei der Verwendung in Werkzeugaufnahmen 22 mit solchen zusätzlichen integrierten Kühlschmiermitteldüsen 26a-b erzielt werden, d.h. hohe Stabilität, größere Laufruhe, hohe Präzision bei der Werkstückbearbeitung auch bei hohem Durchsatz. Das beschriebene Schneidwerkzeug 2 kann somit vielseitig mit verschiedensten Werkzeugaufnahmen verwendet werden.

### Bezugszeichenliste

- 2: Schneidwerkzeug
- 4: Werkzeugschaft
- 6: Stützabschnitt
- 7: Stützfläche
- 8a-b: Aussparung
- 10: Bearbeitungsabschnitt
- 12: Schneidplatte
- 14: Schraube
- 16: Spannut
- 18a-b: Bohrung für Kühlschmiermittel
- 20: Bohreraufnahme für Werkzeuge mit innerer Kühlmittelzufuhr (DIN ISO 10889 Form E1)
- 22: Bohrstangenaufnahme mit innerer Kühlmittelzufuhr und zusätzlichen Kühlschmiermitteldüsen (DIN ISO 10889 Form E2)
- 24: stirnseitige Schneidkante
- 26a-b: Kühlschmiermitteldüse
- 28a-b: Stirnfläche

- A: Werkzeugachse / Antriebsachse

## Patentansprüche

1. Verwendung eines Schneidwerkzeugs zum Bohren ins Volle und zum Drehen mit
einem Werkzeuggrundkörper (4, 6, 10),
wobei der Werkzeuggrundkörper (4, 6, 10) aufweist:
einen Bearbeitungsabschnitt (10) mit einer Aufnahme für eine auswechselbare Schneidplatte (12);
einen Werkzeugschaft (4), der ausgebildet ist in einer Werkzeugaufnahme aufgenommen zu werden; und
einen Stützabschnitt (6) zwischen dem Bearbeitungsabschnitt (10) und dem Werkzeugschaft (4), wobei der Querschnitt des Stützabschnitts (6) größer als der Querschnitt des Werkzeugschafts (4) ist, und wobei der Stützabschnitt (6) dazu ausgebildet ist, an einer Stirnfläche (28a, 28b) einer Werkzeugaufnahme (20, 22) anzuliegen, wenn das Schneidwerkzeug (2) in der Werkzeugaufnahme (20, 22) eingespannt ist,
wobei der Stützabschnitt (6) zumindest eine Aussparung (8a, 8b) zur Aufnahme einer Kühlschmiermitteldüse (26a, 26b) einer Werkzeugaufnahme (22) aufweist, vorzugsweise zumindest zwei Aussparungen,
**dadurch gekennzeichnet, dass** die Verwendung derart erfolgt, dass das Schneidwerkzeug (2) in einer Werkzeugaufnahme (22) mit zumindest einer Kühlschmiermitteldüse (26a, 26b) aufgenommen und eingespannt wird, so dass beim Einspannen des Schneidwerkzeugs (2) in der Werkzeugaufnahme (22) die zumindest eine Kühlschmiermitteldüse (26a, 26b) in einer Aussparung (8a, 8b) zu liegen kommt und der Stützabschnitt (6) die zumindest eine Kühlschmiermitteldüse (26a, 26b) nicht berührt.

2. Verwendung nach Anspruch 1, wobei der maximale Durchmesser des Stützabschnitts (6) mindestens 20%, vorzugsweise mindestens 30%, besonders bevorzugt mindestens 40% größer als der maximale Durchmesser des Werkzeugschafts (4) ist.

3. Verwendung nach Anspruch 1 oder 2, wobei der Stützabschnitt (6) als umlaufender Flansch ausgebildet ist.

4. Verwendung nach Anspruch 1, 2 oder 3, wobei der Stützabschnitt (6) eine umlaufende Stützfläche (7) aufweist, die im eingebauten Zustand an einer Stirnfläche (28a, 28b) der Werkzeugaufnahme (20, 22) anliegt.

5. Verwendung nach einem der vorhergehenden Ansprüche, wobei sich der Stützabschnitt (6) in Richtung Bearbeitungsabschnitt (10) verjüngt.

6. Verwendung nach einem der vorhergehenden Ansprüche, wobei die Länge des Stützabschnitts (6) in axialer Richtung des Schneidwerkzeugs (2) mindestens 1/6 der axialen Länge des Bearbeitungsabschnitts (10) beträgt, vorzugsweise mindestens 1/5, besonders bevorzugt maximal 1/3 der axialen Länge des Bearbeitungsabschnitts (10) beträgt.

7. Verwendung nach einem der vorhergehenden Ansprüche, wobei im Werkzeuggrundkörper zumindest eine im Bereich der Aufnahme für eine auswechselbare Schneidplatte (12) mündende Bohrung (18a, 18b) ausgebildet ist zur Zufuhr von Kühlschmiermittel.

8. Verwendung nach einem der vorhergehenden Ansprüche, wobei die Aussparung (8a, 8b) derart ausgebildet ist, dass im eingebauten Zustand die Schneidplatte (12) von einem Kühlschmiermittelstrahl der Werkzeugaufnahme (22) mit zumindest einer Kühlschmiermitteldüse (26a, 26b) erreichbar ist.

9. Verwendung nach einem der vorhergehenden Ansprüche, wobei die zumindest eine Aussparung (8a, 8b) als Durchbruch oder Bohrung im Stützabschnitt (6) ausgebildet ist, undloder
wobei die zumindest eine Aussparung (8a, 8b) am Umfang des Stützabschnitts (6) ausgebildet ist, so dass die Aussparung nach außen offen ist.

10. Verwendung nach einem der vorhergehenden Ansprüche, wobei der Werkzeuggrundkörper einteilig ausgebildet ist.

11. Verwendung nach einem der Ansprüche 1 bis 9, wobei der Stützabschnitt unlösbar oder lösbar mit dem Schneidwerkzeug verbunden ist, insbesondere mittels einer Schraubverbindung.

## Claims

1. Use of a cutting tool for drilling into solid material and for turning work, having
a main tool body (4, 6, 10),
wherein the main tool body (4, 6, 10) has:
a machining portion (10) with a mount for an interchangeable cutting insert (12);
a tool shank (4), which is designed to be accommodated in a tool mount; and
a supporting portion (6) between the machining portion (10) and the tool shank (4), wherein the cross section of the supporting portion (6) is greater than the cross section of the tool shank (4), and wherein the supporting portion (6) is designed to butt against an end surface (28a, 28b) of a tool mount (20, 22) when the cutting tool (2) has been clamped in the tool mount (20, 22),
wherein the supporting portion (6) has at least one aperture (8a, 8b), preferably at least two apertures, for accommodating a cooling-lubricant nozzle (26a, 26b) of a tool mount (22),
**characterized in that** the use takes place such that the cutting tool (2) is accommodated, and clamped, in a tool mount (22) with at least one cooling-lubricant nozzle (26a, 26b) so that, when the cutting tool (2) is being clamped in the tool mount (22), the at least one cooling-lubricant nozzle (26a, 26b) ends up located in an aperture (8a, 8b) and the supporting portion (6) does not come into contact with the at least one cooling-lubricant nozzle (26a, 26b).

2. Use according to Claim 1, wherein the maximum diameter of the supporting portion (6) is at least 20%, preferably at least 30%, particularly preferably at least 40% greater than the maximum diameter of the tool shank (4).

3. Use according to Claim 1 or 2, wherein the supporting portion (6) is designed in the form of an encircling flange.

4. Use according to Claim 1, 2 or 3, wherein the supporting portion (6) has an encircling supporting surface (7), which, in the installed state, butts against an end surface (28a, 28b) of the tool mount (20, 22).

5. Use according to one of the preceding claims, wherein the supporting portion (6) tapers in the direction of the machining portion (10).

6. Use according to one of the preceding claims, wherein the length of the supporting portion (6) in the axial direction of the cutting tool (2) is at least 1/6 of the axial length of the machining portion (10), preferably at least 1/5, particularly preferably at most 1/3 of the axial length of the machining portion (10).

7. Use according to one of the preceding claims, wherein the main tool body has formed within at least one bore (18a, 18b), which opens out in the region of the mount for an interchangeable cutting insert (12), for the purpose of feeding cooling lubricant.

8. Use according to one of the preceding claims, wherein the aperture (8a, 8b) is designed such that, in the installed state, the cutting insert (12) can be reached by a cooling-lubricant jet of the tool mount (22) with at least one cooling-lubricant nozzle (26a, 26b).

9. Use according to one of the preceding claims, wherein the at least one aperture (8a, 8b) is designed in the form of a through-passage or bore in the supporting portion (6), and/or
wherein the at least one aperture (8a, 8b) is formed on the circumference of the supporting portion (6) so that the aperture is open in the outward direction.

10. Use according to one of the preceding claims, wherein the main tool body is formed in one piece.

11. Use according to one of Claims 1 to 9, wherein the supporting portion is connected to the cutting tool in a non-releasable or releasable manner, in particular by means of a screw connection.

## Revendications

1. Utilisation d'un outil de coupe pour le forage dans la masse et pour le tournage, avec
un corps de base d'outil (4, 6, 10),
le corps de base d'outil (4, 6, 10) présentant :
une section d'usinage (10) avec un logement pour une plaquette de coupe interchangeable (12) ;
une tige d'outil (4) qui est configurée pour être logée dans un logement d'outil ; et
une section d'appui (6) entre la section d'usinage (10) et la tige d'outil (4), la section transversale de la section d'appui (6) étant supérieure à la section transversale de la tige d'outil (4), et la section d'appui (6) étant configurée pour s'appliquer sur une surface frontale (28a, 28b) d'un logement d'outil (20, 22) lorsque l'outil de coupe (2) est serré dans le logement d'outil (20, 22),
la section d'appui (6) présentant au moins un évidement (8a, 8b) pour loger une buse de lubrifiant réfrigérant (26a, 26b) d'un logement d'outil (22), de préférence au moins deux évidements,
**caractérisée en ce que** l'utilisation s'effectue de telle sorte que l'outil de coupe (2) est logé et serré dans un logement d'outil (22) avec au moins une buse de lubrifiant réfrigérant (26a, 26b), de telle sorte que, lors du serrage de l'outil de coupe (2) dans le logement d'outil (22), l'au moins une buse de lubrifiant réfrigérant (26a, 26b) vient se placer dans un évidement (8a, 8b) et la section d'appui (6) ne touche pas l'au moins une buse de lubrifiant réfrigérant (26a, 26b).

2. Utilisation selon la revendication 1, dans laquelle le diamètre maximal de la section d'appui (6) est supérieur d'au moins 20 %, de préférence d'au moins 30 %, de manière particulièrement préférée d'au moins 40 %, au diamètre maximal de la tige d'outil (4).

3. Utilisation selon la revendication 1 ou 2, dans laquelle la section d'appui (6) est réalisée sous la forme d'une bride périphérique.

4. Utilisation selon la revendication 1, 2 ou 3, dans laquelle la section d'appui (6) présente une surface d'appui périphérique (7) qui, à l'état monté, s'applique sur une surface frontale (28a, 28b) du logement d'outil (20, 22) .

5. Utilisation selon l'une quelconque des revendications précédentes, dans laquelle la section d'appui (6) se rétrécit en direction de la section d'usinage (10).

6. Utilisation selon l'une quelconque des revendications précédentes, dans laquelle la longueur de la section d'appui (6) dans la direction axiale de l'outil de coupe (2) est au moins égale à 1/6 de la longueur axiale de la section d'usinage (10), de préférence au moins égale à 1/5, de manière particulièrement préférée au maximum égale à 1/3 de la longueur axiale de la section d'usinage (10).

7. Utilisation selon l'une quelconque des revendications précédentes, dans laquelle au moins un alésage (18a, 18b) débouchant dans la zone du logement pour une plaquette de coupe interchangeable (12) est réalisé dans le corps de base d'outil pour l'amenée de lubrifiant réfrigérant.

8. Utilisation selon l'une quelconque des revendications précédentes, dans laquelle l'évidement (8a, 8b) est réalisé de telle sorte qu'à l'état monté, la plaquette de coupe (12) peut être atteinte par un jet de lubrifiant réfrigérant du logement d'outil (22) avec au moins une buse de lubrifiant réfrigérant (26a, 26b).

9. Utilisation selon l'une quelconque des revendications précédentes, dans laquelle l'au moins un évidement (8a, 8b) est réalisé sous la forme d'une percée ou d'un alésage dans la section d'appui (6), et/ou dans laquelle l'au moins un évidement (8a, 8b) est réalisé sur la périphérie de la section d'appui (6), de telle sorte que l'évidement est ouvert vers l'extérieur.

10. Utilisation selon l'une quelconque des revendications précédentes, dans laquelle le corps de base d'outil est réalisé d'une seule pièce.

11. Utilisation selon l'une quelconque des revendications 1 à 9, dans laquelle la section d'appui est reliée à l'outil de coupe de manière indissociable ou dissociable, notamment au moyen d'une liaison par vis.
